# EUROPEAN PATENT SPECIFICATION

(11) **EP 4 135 296 B1**
(45) Date of publication and mention of the grant of the patent: **17.07.2024**
(21) Application number: 21926053.6
(22) Date of filing: 04.08.2021
(51) Int. Cl.: H04L 65/1104, H04L 65/1108, H04L 65/1069, H04L 65/40

(54) **REAL-TIME COMMUNICATION (RTC) CONNECTION METHOD, SERVER, AND STORAGE MEDIUM**
VERFAHREN, SERVER UND SPEICHERMEDIUM ZUR VERBINDUNG VON ECHTZEITKOMMUNIKATION (RTC)
PROCÉDÉ DE CONNEXION DE COMMUNICATION EN TEMPS RÉEL (RTC), SERVEUR ET SUPPORT DE STOCKAGE

(30) Priority: 30.06.2021 CN 202110735839
(43) Date of publication of application: 15.02.2023
(73) Proprietor: Wangsu Science & Technology Co., Ltd., Shanghai 200030 (CN)
(72) Inventor: CHEN, Xiangxiang, Shanghai 200030 (CN); ZHUANG, Xiaochuan, Shanghai 200030 (CN)
(74) Representative: Novagraaf International SA
(86) International application number: PCT/CN2021/110611
(87) International publication number: WO 2023/272874

(56) References cited:
- CN-A- 101 843 079
- CN-A- 104 662 865
- CN-A- 107 948 215
- CN-A- 112 073 378
- US-A1- 2016 234 298
- US-A1- 2019 014 613
- ANDREAS REITER ET AL: "WebRTC", APPLIED COMPUTING, ACM, 2 PENN PLAZA, SUITE 701 NEW YORK NY 10121-0701 USA, 3 April 2017 (2017-04-03), pages 664 - 669, XP058337500, ISBN: 978-1-4503-4486-9, DOI: 10.1145/3019612.3019844

## Description

### TECHNIC FIELD

The embodiments of the present disclosure relate in general to communication technology, and more specifically to a method for real-time communication connection, a server and a storage medium.

### BACKGROUND

Real-time communication (RTC) was first proposed by Google, which uses webrtc for web video conferencing, uses a user datagram protocol (UDP) as a transport layer protocol, and is aimed at a peer-to-peer (P2P) mode between clients, so that ports are dynamically changed and the ports are dynamically allocated for each connection. Because the communication is between the clients, a conventional method is to open a plurality of ports on a client side, each of the plurality of ports corresponding to one of other different clients connected to this client to distinguish the different clients. Since there are not many other clients that are connected at the same time, it is not a big problem to dynamically configure ports for each of the different clients connected to the client on the client side.

When a content delivery network (CDN) in live broadcast is gradually connected with the RTC, the port opening mode begins to become an issue requiring close attention. On a server side, a server may need to connect thousands of clients at the same time for live broadcast on the Internet. If the conventional method in which each client is configured with one port is still adopted, the number of ports to be configured is large, thereby resulting in problems such as difficulties in port maintenance, vulnerability to attack, and limited number of clients able to be served, etc., due to the large number of ports.

US 2019/014613 A1 relates to an originating user equipment (UE) that initiates a communication session as a real time text (RTT)-based communication may be configured to automatically downgrade the communication session in response to identifying one or more attributes of a response to a session request that indicate a communication session cannot be established with a full set of features requested by the user. For example, the originating UE can determine that a response to a session request indicates at least one of (i) an inability to establish the communication session, or (ii) an ability to establish the communication session without support for the exchange of the non-voice content via the RTT media stream. Based on this determination, a communication session can be established that does not support the exchange of the non-voice content via the RTT media stream. In this manner, rich RTT features are sacrificed in order to connect the user.

ANDREAS REITER ET AL: "WebRTC", APPLIED COMPUTING, ACM, 2 PENN PLAZA, SUITE 701 NEW YORK NY 10121-0701 USA, 3 April 2017 (2017-04-03), pages 664-669, XP058337500 relates to several attacks on WebRTC, compromising user's security and privacy, as well as the privacy of other devices in the same network and shows that even though WebRTC is based on a solid security basis, user's privacy and communication security can be compromised due to several design decisions. For each attack, mitigation strategies are defined where the operation and functionality of WebRTC are still maintained and user's privacy is protected.

### SUMMARY

Embodiments of the present disclosure are intended to provide a method for real-time communication connection, a server and a storage medium, which effectively solve problems in a conventional RTC method of poor security and difficulty in operation and maintenance caused by opening a large number of ports in order to adapt to CDN services. The invention is set out in the appended set of claims.

Embodiments of the present disclosure provide a method for real-time communication connection, applied to service processes started on a server, wherein the server is configured to allocate user datagram protocol, UDP, ports for binding to the service processes, and the service processes are in one-to-one correspondence with the UDP ports, the method including: receiving each respective session description protocol, SDP, request sent by each of at least one client for resource negotiation from a transmission control protocol, TCP, port of the server; sending each respective SDP response to each of the at least one client based on the each respective SDP request, wherein the each respective SDP response carries information of a UDP port corresponding to a service process that processes the each respective SDP request; receiving a UDP connection request sent by a client from the UDP port corresponding to the service process; and establishing a UDP connection by calling a Connect function.

Embodiments of the present disclosure further provide a server including: at least one processor; and memory communicatively coupled to the at least one processor; wherein the memory stores instructions executable by the at least one processor which, when executed by the at least one processor, cause the at least one processor to perform the method for real-time communication connection described above.

Embodiments of the present disclosure further provide a computer readable storage medium storing a computer program that, when executed by at least one processor, cause the at least one processor to perform the method for real-time communication connection described above.

In the embodiments of the present disclosure, the server is configured to have the service processes in one-to-one correspondence with the UDP ports. The service processes receive each respective SDP request sent by each of at least one client for resource negotiation from the TCP port of the server, and send each respective SDP response to each of the at least one client based on the each respective SDP request. The each respective SDP response carries information of the UDP port corresponding to the service process that processes the each respective SDP request. The service process receives the UDP connection request sent by the client corresponding to the each respective SDP response from the UDP port and establishes the UDP connection by calling the Connect function to realize the RTC connection. Since service processes are pre-configured in one-to-one correspondence with the UDP ports in the method of the present disclosure, so that all UDP requests of all clients received by the same UDP port are able to be transported to the same service process to realize servicing a plurality of clients with limited ports, so as to solve poor security and difficulty in operation and maintenance caused by opening a large number of ports.

In addition, since the service processes are in one-to-one correspondence with the UDP ports, the UDP requests from the same client are prevented from being sent to different service processes. Therefore, the service processes are prevented from being unable to perform service processing due to being unable to obtain relevant data from other different processes.

In addition, since the service process processing the SDP request carries the UDP port corresponding to this service process in the SDP response, the SDP request and UDP request from the same client are transmitted to the same service process. Therefore, the service processes are prevented from being unable to perform service processing due to being unable to obtain relevant data from other different processes when these two types of requests are routed to different service processes.

In addition, since the UDP connection is established by calling the Connect function, stateful connections are able to be made to different UDP requests from the same client.

In addition, the service process processing the SDP request is one of the service processes locally started on the server which is selected by the server based on a load balancing principle. Through load balancing, the RTC connections of all the clients are able to be evenly distributed to each of the service processes. In this way, the service volume of subsequent UDP requests of the service processes is balanced.

In addition, the each respective SDP response carries first verification information generated by the service process, and the UDP connection request carries second verification information; and before establishing the UDP connection by calling the Connect function, the method further includes: verifying the second verification information based on the first verification information; and in response to the verification succeeding, performing the establishment of the UDP connection by calling the Connect function. The verification information is set to ensure the security and validity of the UDP connection.

In addition, the each respective SDP request includes offer information carried in a hyper text transfer protocol, HTTP, request sent by each of the at least one client, and the HTTP request further includes related information of the each respective SDP request initiated by each of the at least one client this time; and wherein the each respective SDP response includes answer information carried in a HTTP response sent by the service process, and the first verification information includes attribute information included in the answer information; and after receiving the each respective SDP request, the method further includes: creating a mapping entry corresponding to the each respective SDP request, wherein the mapping entry includes related information of the each respective SDP request and the first verification information. By creating the mapping entry, the related information and verification information of the SDP request are mapped, so as to facilitate verifying information of the SDP request and subsequently querying the related information of the SDP request.

In addition, verifying the second verification information based on the first verification information includes: in response to a mapping entry corresponding to the second verification information existing in the created mapping entry, determining that the verification succeeds.

In addition, the first verification information includes a timestamp of generating the first verification information, a service process identifier, and a real-time communication, RTC, connection number. This generation mode guarantees the uniqueness of the verification information to the maximum limit.

In addition, the related information of the each respective SDP request includes information of a domain name and a streaming name of a streaming media that is requested.

In addition, the offer information includes client-supported audio-video coding parameters, and the answer information includes audio-video coding parameters fed back by the server; and the audio-video coding parameters fed back by the server are live audio-video coding parameters acquired by the server from a live broadcast server based on the information of the domain name and the streaming name in the HTTP request.

In addition, the UDP connection request includes a binding request based on a simple traversal of UDP through network address translation, STUN, protocol, and the second verification information includes STUN authentication information carried in the binding request. The server verifies the binding request of the STUN protocol through the second verification information.

In addition, establishing the UDP connection by calling the Connect function includes: creating a unique file descriptor of the UDP connection; binding the unique file descriptor to the UDP port corresponding to the service process; associating 5-tuple information corresponding to the UDP connection through reversely connecting an address of a peer end; and associating the 5-tuple information corresponding to the UDP connection with the service process corresponding to the UDP connection based on the unique file descriptor to complete the UDP connection. By binding the file descriptor to the 5-tuple information, the file descriptor is able to be used to distinguish the UDP connections of different clients, and ensure that the connected UDP packets are sent and received normally after the service process reloads, so that a plurality of UDP packets belonging to the same request are not confused.

In addition, associating the 5-tuple information corresponding to the UDP connection with the service process corresponding to the UDP connection based on the unique file descriptor to complete the UDP connection includes: setting the unique file descriptor as a read-write event monitored by the service process, and setting a read-write event callback function of the unique file descriptor to receive and process subsequent UDP requests corresponding to the unique file descriptor through the read-write event callback function.

### BRIEF DESCRIPTION OF THE DRAWINGS

In order to illustrate the technical solutions in the embodiments of the present disclosure more clearly, the accompanying drawings used in the description of the embodiments are briefly described below. It is apparent that the drawings in the following description are only some embodiments of the present disclosure. For those of ordinary skills in the art, other drawings may also be obtained according to these drawings without any creative effort.
FIG. 1 is a specific flowchart of a method for real-time communication connection according to a first embodiment of the present disclosure.
FIG. 2 is a specific flowchart of a method for real-time communication connection according to a second embodiment of the present disclosure.
FIG. 3 is another specific flowchart of the method for real-time communication connection according to the second embodiment of the present disclosure.
FIG. 4 is a schematic structural diagram of a server according to a third embodiment of the present disclosure.

### DETAILED DESCRIPTION OF THE EMBODIMENTS

In order to make the objectives, technical solutions and advantages of the present disclosure clearer, embodiments of the present disclosure are described in details with reference to the accompanying drawings. Those of ordinary skill in the art should appreciate that many technical details have been proposed in various embodiments of the present disclosure for the reader to better understand the present disclosure. However, the technical solutions claimed in the appended claims are also able to be realized even without these technical details and various changes and modifications based on the following embodiments.

Unlike other protocol requests, RTC involves interaction processes of two protocol requests. A first protocol request interaction process is a session description protocol (SDP) process, i.e., signaling exchange. This signaling exchange process is usually performed using hyper text transfer protocol (HTTP) (or other protocols such as websocket). HTTP is based on transmission control protocol (TCP) and needs to perform information transmission through a TCP port on the device. A second protocol request interaction process is a connection process of user datagram protocol (UDP). This process mainly includes processing of a simple traversal of UDP over NATs (STUN) request, a datagram transport layer security (DTLS) request and a real-time protocol/ real-time control protocol (RTP/RTCP) request. Therefore, HTTP and subsequent UDP requests are ensured to be transmitted to the same process, or are transmitted to different processes as long as related information of previous signaling interaction, including streaming names, is able to be read.

The entire interaction process of RTC is described as follows.

Firstly, SDP signaling interaction is performed based on TCP. A client initiates a 'sdp offer' request, and a server feeds back a 'sdp answer' response to perform resource negotiation for related information of subsequent UDP connection establishment.

Secondly, UDP requests are processed based on a RTC protocol. The processing first involves the STUN request, then the DTLS handshake, and finally the transmission of audio-video data RTC packets. However, UDP is a connectionless protocol, and each data packet is independent. There is no concept of connection in each data packet, so a conventional practice is to establish different ports through UDP to distinguish different clients. In this way, a request sent by which client is able to be identified by a port from which the data packet is received, so that a plurality of different clients are able to be served by the server. However, a large number of ports need to be opened on the server at the same time to correspond to different clients when the concurrency is relatively large, so there are risks in operation, maintenance and security.

To solve this problem, embodiments of the present disclosure provide a method for implementing RTC connection in a manner that one process corresponds to one port. In this method, each process is independent and does not require inter-process communication. All clients requesting to the same process use the same port, and different processes use different ports. In this way, a maximum number of ports opened on the server is the same as the number of the processes. Since the number of the processes is generally not very large, this method is also referred to as a limited port method, that is, there is no need to open as many ports (i.e., one port for one client) as in the conventional method.

When the signaling interaction is performed based on HTTP, a port number allocated to each of the processes is notified to the client through a SDP message, and subsequent UDP requests of the client are sent to this port through STUN, DTLS, and RTP/RTCP, that is, all requests of the same client are transmitted to the same process, and information such as steaming names stored in the previous signaling interaction is able to be obtained in the same process space, without being interactively obtained through the inter-process communication (IPC).

A first embodiment of the present disclosure relates to a method for real-time communication (RTC) connection, which is applied to a server. The server is configured to allocate UDP ports for binding to service processes started on the server, so that the service processes are in one-to-one correspondence with the UDP ports. The service processes are processes that actually processes service requests, not main processes configured to transmit the service requests or scheduling processes responsible for load balancing.

Specifically, when service processes are started, the server assigns UDP ports to the service processes through a preconfigured port range and binds the service processes to the UDP ports, one service process corresponding to one UDP port, so that the UDP ports are within a controllable range. For example, if the preconfigured UDP port range is 16000 to 16030, and 30 UDP ports are provided for 7 service processes, the number of UDP ports available for each process is 4 (i.e., 30/7≈4). For each service process, only one UDP port is used each time the service process is started, which aims to avoid continuing to bind a second UDP port when a first UDP port fails to be bound. For example, a first service process corresponds to a port 16000, a second service process corresponds to a port 16004, and a third service process corresponds to a port 16008. If it is not desired to request for too many ports to be released, it is proper to request for the same number of ports as the number of processes. For example, with respect to 7 service processes, only 7 UDP ports need to be requested. At the same time, 'reuse-port' needs to be set, so that multiple processes are able to coexist with old and new in a reload mode without affecting data interaction.

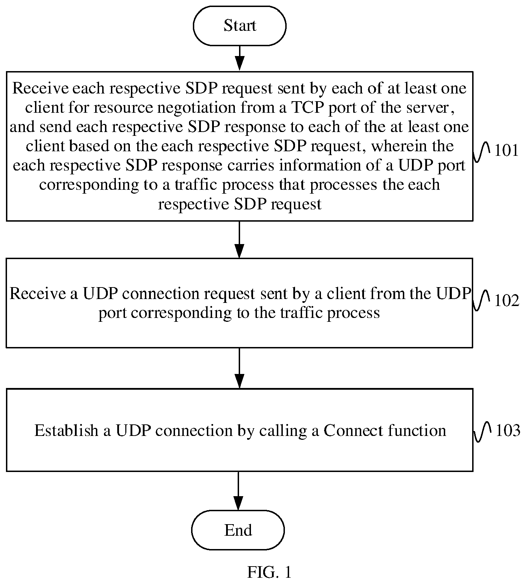

As shown in FIG. 1, the method for real-time communication connection in the embodiments of the present disclosure includes the following operations.

In 101, each respective SDP request sent by each of at least one client for resource negotiation is received from a TCP port of the server, and each respective SDP response is sent to each of the at least one client based on the each respective SDP request. The each respective SDP response carries information of a UDP port corresponding to a service process that processes the each respective SDP request.

Specifically, the server is provided with the TCP port for receiving an HTTP request sent by the client. The client initiates the SDP request through an HTTP protocol for resource negotiation with the server, i.e., a signaling interaction process. A purpose of this signaling interaction process is to perform resource negotiation for related information of subsequent UDP connection establishment. In addition, the server a port on which the client sends a UDP connection request in the resource negotiation process, i.e., the UDP port. The server feeds back information of the indicated UDP port to the client in the SDP response.

After receiving the SDP request, the server selects, based on current loading conditions of all service processes on the server, a service process from all the service processes to receive and process a current SDP request sent by the client. That is, the service process that processes the SDP request is a service process selected by the server from locally started service processes based on a load balancing principle. The selected service process feeds back a UDP port corresponding to the selected service process to the client in the SDP response, so as to instruct the client to send the UDP request to the server through the UDP port, so that subsequent UDP requests are still able to be transmitted to the selected service process for processing.

In 102, the service process receives a UDP connection request sent by a client from the UDP port corresponding to the service process.

After receiving the SDP response fed back by the service process of the server, the client constructs the UDP connection request based on the resource negotiation result, and sends the UDP connection request to the server through the UDP port carried in the SDP response to start the UDP connection establishment.

In 103, the service process establishes a UDP connection by calling a Connect function.

Because UDP is a connectionless protocol and each data packet is independent and has no concept of connection, the method for establishing the UDP connection by calling the Connect function in the present disclosure is able to record related data of a new connection (e.g., 5-tuple information corresponding to the new connection) when the new connection is created, and query the recorded data to obtain a status of the previous connection when the UDP request is received again, thereby providing the stateless UDP connection with the effect of stateful connection.

In the embodiments of the present disclosure, the server is configured to have the service processes in one-to-one correspondence with the UDP ports. The service processes receive each respective SDP request sent by each of at least one client for resource negotiation from the TCP port of the server, and send each respective SDP response to each of the at least one client based on the each respective SDP request. The each respective SDP response carries information of the UDP port corresponding to the service process that processes the each respective SDP request. The service process receives the UDP connection request sent by the client corresponding to the each respective SDP response from the UDP port and establishes the UDP connection by calling the Connect function to realize the RTC connection. Since service processes are pre-configured in one-to-one correspondence with the UDP ports in the method of the present disclosure, so that all UDP requests of all clients received by the same UDP port are able to be transported to the same service process to realize servicing a plurality of clients with limited ports, so as to solve poor security and difficulty in operation and maintenance caused by opening a large number of ports.

In addition, since the service processes are in one-to-one correspondence with the UDP ports, the UDP requests from the same client are prevented from being sent to different service processes. Therefore, the service processes are prevented from being unable to perform service processing due to being unable to obtain relevant data from other different processes.

In addition, since the service process processing the SDP request carries the UDP port corresponding to this service process in the SDP response, the SDP request and UDP request from the same client are transmitted to the same service process. Therefore, the service processes are prevented from being unable to perform service processing due to being unable to obtain relevant data from other different processes when these two types of requests are routed to different service processes.

In addition, since the UDP connection is established by calling the Connect function, stateful connections are able to be made to different UDP requests from the same client.

A second embodiment of the present disclosure relates to a method for real-time communication connection. The second embodiment is an improvement on the first embodiment in that before establishing the UDP connection, the server generates verification information at the resource negotiation stage to verify the UDP connection request. That is, each respective SDP response fed back by the server carries first verification information generated by the service process (i.e., an operation 101'). Accordingly, the UDP connection request carries second verification information (i.e., an operation 102'). The second verification information is fed back by the server to the client. For distinguishing, the verification information in the SDP response is denoted as the first verification information, and the verification information carried in the UDP connection request is denoted as the second verification information.

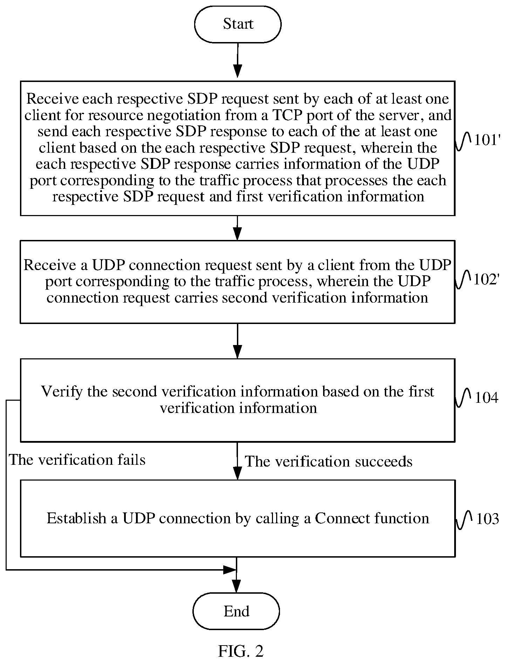

As shown in FIG. 2, the method embodiment further includes the following operations before the operation 103.

In 104, the second verification information is verified based on the first verification information. In response to the verification succeeding, the operation 103 of establishing the UDP connection by calling the Connect function is executed. The content of the first verification information is not limited in this embodiment.

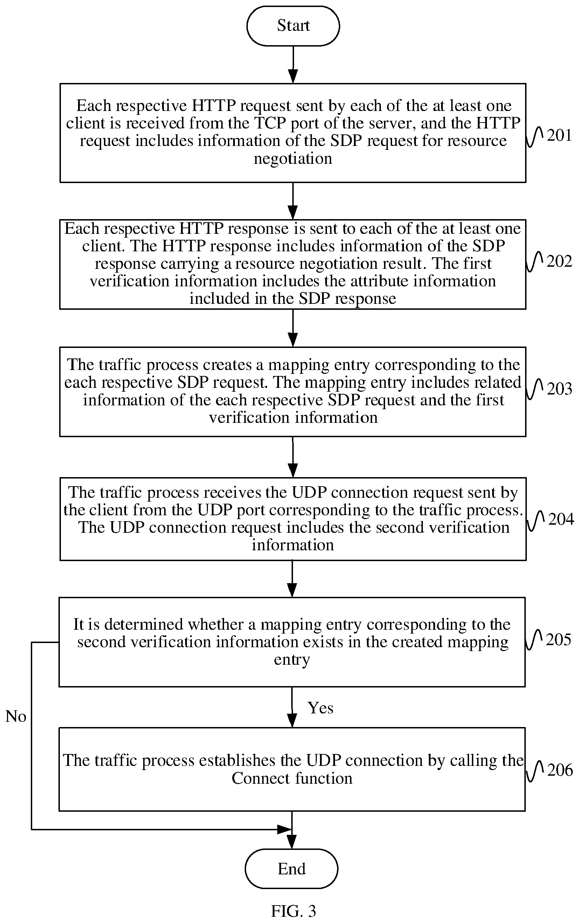

In an example, the SDP request includes 'offer' information carried in the HTTP request sent by the client, and the HTTP request further includes related information of the SDP request initiated by the client this time. For example, the related information includes information of a domain name and a streaming name of a streaming media requested by the client. The SDP response includes 'answer' information carried in the HTTP response sent by the service process. The first verification information includes attribute information included in the 'answer' information. In this embodiment, UDP connection requests subsequently sent by the same client are able to be verified by constructing a mapping entry corresponding to each SDP request. As shown in FIG. 3, the method for real-time communication connection of this embodiment includes the following operations.

In 201, each respective HTTP request sent by each of the at least one client is received from the TCP port of the server, and the HTTP request includes information of the SDP request for resource negotiation.

The 'offer' information includes client-supported audio-video coding parameters, such as H264 for video and opus for audio. In addition, the HTTP request further includes related information of the SDP request initiated by the client this time, e.g., information of the domain name and streaming name of the streaming media requested by the client.

In 202, each respective HTTP response is sent to each of the at least one client. The HTTP response includes information of the SDP response carrying a resource negotiation result. The first verification information includes the attribute information included in the 'answer' information (i.e., the SDP response).

The 'answer' information includes audio-video coding parameters fed back by the server.

The audio-video coding parameters fed back by the server are live audio-video coding parameters acquired by the server from a live broadcast server based on information of the domain name and the streaming name in the HTTP request.

Specifically, when the server constructs the 'answer' information, i.e., the SDP response, a mode of synchronizing back to origin is adopted in this embodiment in order to obtain real audio-video information of the streaming media requested by the client, i.e., synchronizing to initiate push-pull stream requests to a backend live broadcast server, and constructs corresponding audio-video coding parameters to be carried in the 'answer' information to respond to the client after obtaining the response of the backend live broadcast server.

Regarding a process of constructing the first verification information, the server receives the HTTP request including the 'offer' information, where the 'offer' information carries attribute information 'ice-ufrag' for identifying the client. Similarly, the 'answer' information returned by the server to the client also carries attribute information 'ice-ufrag' for identifying the server. The server uses the attribute information as the first verification information. When constructing the attribute information, the attribute information may include a field of 'current timestamp_process PID_RTC_ sequence number to distinguish RTC connections of different clients.

The 'current timestamp' is a timestamp for generating the attribute information (i.e., the first verification information), the 'process PID' is an identifier for a current service process, and the 'RTC_ sequence' is a sequence number of a current RCT connection. When the sequence number reaches a maximum value, the sequence number is restarted from zero to ensure that the 'ice_ufrag' fed back by each service process to each client is unique at the current time.

In 203, the service process creates a mapping entry corresponding to the each respective SDP request. The mapping entry includes related information of the each respective SDP request and the first verification information.

Specifically, after generating the 'ice-ufrag', the server uses the 'ice-ufrag' as a key and the related information (information of the domain name and streaming name) of the SDP request as a value, generates a mapping entry ('ice-ufrag' - related information of the SDP request), and adds the mapping entry to a pre-constructed mapping table.

In 204, the service process receives the UDP connection request sent by the client from the UDP port corresponding to the service process. The UDP connection request includes the second verification information.

After receiving the SDP response fed back by the service process of the server, the client constructs the UDP request based on the resource negotiation result, and sends the UDP connection request to the server through the UDP port carried in the SDP response to start the UDP connection establishment.

Specifically, after receiving the SDP response, the client extracts related parameters such as 'ice_ufrag' from the SDP response, and also obtains information of an IP address and a port (information of the IP address and UDP port of the server) in 'ice candidate'. The UDP connection is then initiated to the server. A binding request of the STUN protocol is initiated first, and the binding request carries 'username' attribute, a format of the `username' attribute is 'server_ice_ufrag: client_ice_ufrag', and the ' server_ice_ufrag' is the 'ice_ufrag' in the UDP response sent by the server. This `username' attribute is carried in the UDP connection request, thus it is the second verification information. The second verification information is used as STUN authentication information in the binding request for the server to authenticate the binding request. The client sends the binding request to a specified IP address and port of the server (i.e., the IP address and port in 'ice candidate' in UDP response).

In 205, it is determined whether a mapping entry corresponding to the second verification information exists in the created mapping entry. In response to the mapping entry corresponding to the second verification information existing in the created mapping entry, it is determined that the verification succeeds and an operation 206 is performed.

Specifically, after receiving the STUN binding request sent by the client, the server parses the request to obtain the corresponding 'username' attribute, extracts the content on the left side of the colon ':' in the 'username' attribute as the key, searches the mapping table for whether there is a mapping entry with 'server_ice_ufrag' as the key. In response to there being the mapping entry with 'server_ice_ufrag' as the key, it is determined that the verification succeeds, and a next operation is performed. In response to there being no mapping entry with 'server_ice_ufrag' as the key, it is determined that the verification fails, and the request ends.

In 206, the service process establishes the UDP connection by calling the Connect function.

In an example, the service process first creates a unique file descriptor for a current connection, binds the file descriptor to the UDP port corresponding to the service process, and associates 5-tuple information corresponding to the current connection through reversely connecting an address of a peer end, and associates the 5-tuple information corresponding to the current connection with the service process corresponding to the current connection based on the file descriptor to complete the UDP connection.

Specifically, the service process creates a file descriptor 'fd' for a current binding request, binds the 'fd' to the UDP port corresponding to the service process, and connects an IP address of the peer end (i.e., the client) to associate the 5-tuple information corresponding to the current connection. A pseudo code representation is shown as follows.
socket fd;
bind (fd, local_sockaddr, local_socklen);
connect (fd, remote_sockaddr, remote_socklen);

Then, the 5-tuple information and service process corresponding to the current connection are associated based on the file descriptor to complete the UDP connection.

In an example, the file descriptor is set as a read-write event monitored by the service process, and a read-write event callback function of the file descriptor is set to receive and process subsequent UDP requests corresponding to the file descriptor through the read-write event callback function.

Specifically, the `fd' is added to 'epoll' of the service process to monitor a corresponding read-write event, and the read-write event callback function of the 'fd' needs to be added. The function is a unified entry function of the UDP request corresponding to the RTC connection. In this function, all UDP requests of the RTC connection are received and processed, and corresponding branches such as STUN, DTLS and SRTP\SRTCP are taken according to specific file descriptors.

Then, a STUN binding response is constructed to response to the client.

All subsequent UDP requests operate through read-write events registered by 'fd' bound to the UDP port to implement stateful connections of the UDP requests from a plurality of different clients.

In the embodiments of the present disclosure, the security and validity of the UDP connection are ensured by setting the verification information. The related information and verification information of the SDP request are mapped by creating the mapping entry, so as to facilitate verifying the SDP request and subsequently querying the related information of the SDP request. The stateful connection of UDP is implemented by setting the file descriptor to bind the 5-tuple information involved in the RTC connection.

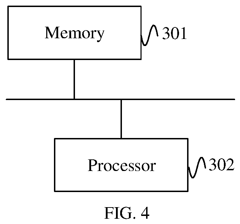

A third embodiment of the present disclosure relates to a server. As shown in FIG. 4, the server includes at least one processor 302 and memory 301 communicatively coupled to the at least one processor 302. The memory 301 stores instructions executable by the at least one processor 302 which, when executed by the at least one processor 302, cause the at least one processor 302 to perform any of the method embodiments described above.

The memory 301 and the at least one processor 302 are connected by means of bus, the bus may include any number of interconnected buses and bridges, and the bus connect various circuits of the at least one processor 302 and the memory 301 together. The bus may also connect together various other circuits such as peripheral devices, voltage regulators, and power management circuits, all of which are well known in the art, and therefore are not further described herein. A bus interface provides an interface between the bus and a transceiver. The transceiver may be an element or a plurality of elements, such as a plurality of receivers and transmitters for providing units for communicating with various other devices on a transmission medium. The data processed by the at least one processor 302 is transmitted over a wireless medium via antennas, and the antennas further receive the data and transmit the data to the at least one processor 302.

The at least one processor 302 is responsible for managing the bus and general processing, and may also provide various functions, including timing, peripheral interfaces, voltage regulation, power management, and other control functions. The memory 301 may be configured to store data used by the at least one processor 302 in performing operations.

A fourth embodiment of the present disclosure relates to a computer readable storage medium storing a computer program. Any of the above method embodiments is implemented when the computer program is executed by at least one processor.

That is, it should be understood by those skilled in the art that all or a portion of the operations in the method embodiments described above may be implemented by a program instructing relevant hardware. The program is stored in a storage medium, which includes several instructions to cause a device (which may be a single chip microcomputer, a chip, or the like) or a processor to perform all or a portion of the operations of the method in the embodiments described herein. The foregoing storage medium includes a USB flash drive, a removable hard disk, read-only memory (ROM), random access memory (RAM), a magnetic disk, an optical disk, or any other medium that is able to store program codes.

Those of ordinary skill in the art should appreciate that the above embodiments are specific embodiments of the present disclosure, and that various changes may be made in form and detail in practical application, provided that these various changes fall within the scope of the invention which is defined by the appended claims.

## Claims

1. A method for real-time communication connection, applied to service processes started on a server, wherein the server is configured to allocate user datagram protocol, UDP, ports for binding to the service processes, and the service processes are in one-to-one correspondence with the UDP ports, the method comprising:
receiving (101), by the server, session description protocol, SDP, requests sent by at least one client for resource negotiation from a transmission control protocol, TCP, port of the server;
for each respective SDP request of the SDP requests, sending (101), by the server, a respective SDP response to a client of the at least one client based on the respective SDP request, the client of the at least one client having sent the respective SDP request, wherein the respective SDP response carries information of a UDP port corresponding to a service process that processes the respective SDP request, wherein the service process processing the respective SDP request is one of the service processes locally started on the server which is selected by the server based on a load balancing principle;
receiving (102), by the service process, a UDP connection request sent by the client from the UDP port corresponding to the service process; and
establishing (103), by the service process, a UDP connection by calling a Connect function.

2. The method according to claim 1, wherein the respective SDP response carries first verification information generated by the service process, and the UDP connection request carries second verification information; and
before establishing the UDP connection by calling the Connect function, the method further comprises:
verifying (104) the second verification information based on the first verification information; and
in response to the verification succeeding, performing (103) the establishment of the UDP connection by calling the Connect function.

3. The method according to claim 2, wherein the respective SDP request includes offer information carried in a hyper text transfer protocol, HTTP, request sent by each of the at least one client, and the HTTP request further includes related information of the respective SDP request initiated by each of the at least one client this time; and wherein the respective SDP response includes answer information carried in a HTTP response sent by the service process, and the first verification information includes attribute information included in the answer information; and
after receiving the respective SDP request, the method further comprises:
creating (203) a mapping entry corresponding to the respective SDP request, wherein the mapping entry includes related information of the respective SDP request and the first verification information.

4. The method according to claim 3, wherein verifying the second verification information based on the first verification information comprises:
in response to a mapping entry corresponding to the second verification information existing in the created mapping entry, determining that the verification succeeds.

5. The method according to claim 3, wherein the first verification information includes a timestamp of generating the first verification information, a service process identifier, and a real-time communication, RTC, connection number.

6. The method according to claim 3, wherein the related information of the respective SDP request includes information of a domain name and a streaming name of a streaming media that is requested.

7. The method according to claim 6, wherein the offer information includes client-supported audio-video coding parameters, and the answer information includes audio-video coding parameters fed back by the server; and
wherein the audio-video coding parameters fed back by the server are live audio-video coding parameters acquired by the server from a live broadcast server based on the information of the domain name and the streaming name in the HTTP request.

8. The method according to claim 3, wherein the UDP connection request includes a binding request based on a simple traversal of UDP through network address translation, STUN, protocol, and the second verification information includes STUN authentication information carried in the binding request.

9. The method according to claim 8, wherein establishing the UDP connection by calling the Connect function comprises:
creating a unique file descriptor for the UDP connection;
binding the unique file descriptor to the UDP port corresponding to the service process;
associating 5-tuple information corresponding to the UDP connection through reversely connecting an address of a peer end; and
associating the 5-tuple information corresponding to the UDP connection with the service process corresponding to the UDP connection based on the unique file descriptor to complete the UDP connection.

10. The method according to claim 9, wherein associating the 5-tuple information corresponding to the UDP connection with the service process corresponding to the UDP connection based on the unique file descriptor to complete the UDP connection comprises:
setting the unique file descriptor as a read-write event monitored by the service process, and setting a read-write event callback function of the unique file descriptor to receive and process subsequent UDP requests corresponding to the unique file descriptor through the read-write event callback function.

11. A server, comprising:
at least one processor (302); and
a memory (301) communicatively coupled to the at least one processor;
wherein the memory stores instructions executable by the at least one processor which, when executed by the at least one processor, cause the at least one processor to perform the method for real-time communication connection according to any one of claims 1 to 10.

12. A computer readable storage medium storing a computer program that, when executed by at least one processor, causes the at least one processor to perform the method for real-time communication connection according to any one of claims 1 to 10.

## Patentansprüche

1. Verfahren für eine Echtzeitkommunikationsverbindung, das auf Dienstprozesse angewandt wird, die auf einem Server gestartet werden, wobei der Server dazu ausgelegt ist, Benutzerdatagrammprotokoll(UDP)-Ports zum Anbinden der Dienstprozesse zuzuteilen, und die Dienstprozesse in einer Einszu-eins-Entsprechung mit den UDP-Ports stehen, wobei das Verfahren Folgendes umfasst:
Empfangen (101) von Sitzungsbeschreibungsprotokoll(SDP)-Anforderungen durch den Server, die von mindestens einem Client für eine Ressourcenaushandlung von einem Übertragungssteuerprotokoll(TCP)-Port des Servers gesendet werden;
für jede jeweilige SDP-Anforderung der SDP-Anforderungen Senden (101) einer jeweiligen SDP-Antwort durch den Server an einen Client des mindestens einen Clients auf Basis der jeweiligen SDP-Anforderung, wobei der Client des mindestens einen Clients die jeweilige SDP-Anforderung gesendet hat, wobei die jeweilige SDP-Antwort Informationen über einen UDP-Port enthält, der einem Dienstprozess entspricht, der die jeweilige SDP-Anforderung verarbeitet, wobei der Dienstprozess, der die jeweilige SDP-Anforderung verarbeitet, einer der Dienstprozesse ist, die lokal auf dem Server gestartet werden, der vom Server auf Basis eines Lastausgleichsprinzips ausgewählt wird;
Empfangen (102) einer UDP-Verbindungsanforderung durch den Dienstprozess, die vom Client vom UDP-Port gesendet wird, der dem Dienstprozess entspricht; und
Aufbauen (103) einer UDP-Verbindung durch den Dienstprozess durch Aufrufen einer Connect-Funktion.

2. Verfahren nach Anspruch 1, wobei die jeweilige SDP-Antwort erste Verifizierungsinformationen enthält, die vom Dienstprozess erzeugt werden, und die UDP-Verbindungsanforderung zweite Verifizierungsinformationen enthält; und
das Verfahren umfasst vor Aufbauen der UDP-Verbindung durch Aufrufen der Connect-Funktion ferner Folgendes:
Verifizieren (104) der zweiten Verifizierungsinformationen auf Basis der ersten Verifizierungsinformationen; und
in Reaktion auf die erfolgreiche Verifizierung Durchführen (103) des Aufbaus der UDP-Verbindung durch Aufrufen der Connect-Funktion.

3. Verfahren nach Anspruch 2, wobei die jeweilige SDP-Anforderung Angebotsinformationen beinhaltet, die in einer Hypertexttransferprotokoll(HTTP)-Anforderung enthalten sind, die von jedem des mindestens einen Clients gesendet wird, und die HTTP-Anforderung ferner zugehörige Informationen der jeweiligen SDP-Anforderung beinhaltet, die von jedem des mindestens einen Clients zu dieser Zeit initiiert wird; und wobei die jeweilige SDP-Antwort Antwortinformationen beinhaltet, die in einer HTTP-Antwort enthalten sind, die vom Dienstprozess erzeugt wird, und die ersten Verifizierungsinformationen Attributinformationen beinhalten, die in den Antwortinformationen beinhaltet sind; und
das Verfahren umfasst nach Empfangen der jeweiligen SDP-Anforderung ferner Folgendes:
Erstellen (203) eines Zuordnungseintrags, der der jeweiligen SDP-Anforderung entspricht, wobei der Zuordnungseintrag zugehörige Informationen der jeweiligen SDP-Anforderung und die ersten Verifizierungsinformationen beinhaltet.

4. Verfahren nach Anspruch 3, wobei das Verifizieren der zweiten Verifizierungsinformationen auf Basis der ersten Verifizierungsinformationen Folgendes umfasst:
in Reaktion auf einen Zuordnungseintrag, der den zweiten Verifizierungsinformationen entspricht, die im erstellten Zuordnungseintrag bestehen, Bestimmen, dass die Verifizierung erfolgreich war.

5. Verfahren nach Anspruch 3, wobei die ersten Verifizierungsinformationen einen Zeitstempel des Erzeugens der ersten Verifizierungsinformationen, eine Dienstprozesskennung und eine Echtzeitkommunikations(RTC)-Verbindungsnummer beinhalten.

6. Verfahren nach Anspruch 3, wobei die zugehörigen Informationen der jeweiligen SDP-Anforderung Informationen über einen Domänennamen und einen Streamingnamen eines Streamingmediums, das angefordert wird, beinhalten.

7. Verfahren nach Anspruch 6, wobei die Angebotsinformationen clientunterstützte Audio-Video-Codierparameter beinhalten und die Antwortinformationen vom Server rückgemeldete Audio-Video-Codierparameter beinhalten; und
wobei die vom Server rückgemeldeten Audio-Video-Codierparameter Live-Audio-Video-Codierparameter sind, die vom Server von einem Livebroadcastserver auf Basis der Informationen über den Domänennamen und den Streamingnamen in der HTTP-Anforderung sind.

8. Verfahren nach Anspruch 3, wobei die UDP-Verbindungsanforderung eine Bindungsanforderung auf Basis eines Simple Traversal of UDP Through Network Address Translation(STUN)-Protokolls beinhaltet und die zweiten Verifizierungsinformationen STUN-Authentifizierungsinformationen beinhalten, die in der Bindungsanforderung enthalten sind.

9. Verfahren nach Anspruch 8, wobei das Aufbauen der UDP-Verbindung durch Aufrufen der Connect-Funktion Folgendes umfasst:
Erstellen eines eindeutigen Dateideskriptors für die UDP-Verbindung;
Anbinden des eindeutigen Dateideskriptors an den UDP-Port, der dem Dienstprozesse entspricht;
Verknüpfen von 5-Tupel-Informationen, die der UDP-Verbindung entsprechen, durch umgekehrtes Verbinden einer Adresse eines Peer-Endes; und
Verknüpfen der 5-Tupel-Informationen, die der UDP-Verbindung entsprechen, auf Basis des eindeutigen Dateideskriptors mit dem Dienstprozess, der der UDP-Verbindung entspricht, um die UDP-Verbindung abzuschließen.

10. Verfahren nach Anspruch 9, wobei das Verknüpfen der 5-Tupel-Informationen, die der UDP-Verbindung entsprechen, auf Basis des eindeutigen Dateideskriptors mit dem Dienstprozess, der der UDP-Verbindung entspricht, um die UDP-Verbindung abzuschließen, Folgendes umfasst:
Einstellen des eindeutigen Dateideskriptors als ein Lesen-Schreiben-Ereignis, das vom Dienstprozess überwacht wird, und Einstellen einer Lesen-Schreiben-Ereignisrückruffunktion des eindeutigen Dateideskriptors, um nachfolgende UDP-Anforderungen, die dem eindeutigen Dateideskriptor entsprechen, über die Lesen-Schreiben-Ereignisrückruffunktion zu empfangen und zu verarbeiten.

11. Server, der Folgendes umfasst:
mindestens einen Prozessor (302); und
einen Speicher (301), der kommunikativ an den mindestens einen Prozessor gekoppelt ist;
wobei im Speicher Anweisungen gespeichert sind, die von dem mindestens einen Prozessor ausführbar sind und die, wenn sie von dem mindestens einen Prozessor ausgeführt werden, den mindestens einen Prozessor veranlassen, das Verfahren für eine Echtzeitkommunikationsverbindung nach einem der Ansprüche 1 bis 10 durchzuführen.

12. Computerlesbares Speichermedium, auf dem ein Computerprogramm gespeichert ist, das, wenn es von mindestens einem Prozessor ausgeführt wird, den mindestens einen Prozessor veranlasst, das Verfahren für eine Echtzeitkommunikationsverbindung nach einem der Ansprüche 1 bis 10 durchzuführen.

## Revendications

1. Procédé de connexion de communication en temps réel, appliqué à des processus de service lancés sur un serveur, dans lequel le serveur est configuré pour allouer des ports de protocole de datagramme d'utilisateur, UDP, pour se lier aux processus de service, et les processus de service sont en correspondance biunivoque avec les ports UDP, le procédé comprenant :
la réception (101), par le serveur, de demandes de protocole de description de session, SDP envoyées par au moins un client pour la négociation de ressources à partir d'un port de protocole de contrôle de transmission, TCP, du serveur ;
pour chaque demande SDP respective des demandes SDP, l'envoi (101), par le serveur, d'une réponse SDP respective à un client du ou des clients sur la base de la demande SDP respective, le client du ou des clients ayant envoyé la demande SDP respective, dans lequel la réponse SDP respective contient des informations d'un port UDP correspondant à un processus de service qui traite la demande SDP respective, dans lequel le processus de service qui traite la demande SDP respective est l'un des processus de service lancés localement sur le serveur qui est sélectionné par le serveur sur la base d'un principe d'équilibrage de charge ;
la réception (102), par le processus de service, d'une demande de connexion UDP envoyée par le client du port UDP correspondant au processus de service ; et
l'établissement (103), par le processus de service, d'une connexion UDP en appelant une fonction Connect.

2. Procédé selon la revendication 1, dans lequel la réponse SDP respective contient des premières informations de vérification générées par le processus de service, et la demande de connexion UDP contient des deuxièmes informations de vérification ; et
avant l'établissement de la connexion UDP en appelant la fonction Connect, le procédé comprend en outre :
la vérification (104) des deuxièmes informations de vérification sur la base des premières informations de vérification ; et
si la vérification est réussie, effectuer (103) l'établissement de la connexion UDP en appelant la fonction Connect.

3. Procédé selon la revendication 2, dans lequel la demande SDP respective comporte des informations d'offre contenues dans une demande de protocole de transfert hypertexte, HTTP, envoyée par chacun du ou des clients, et la demande HTTP comporte en outre des informations relatives de la demande SDP respective initiée par chacun du ou des clients cette fois-ci ; et dans lequel la réponse SDP respective comporte des informations de réponse contenues dans une réponse HTTP envoyée par le processus de service, et les premières informations de vérification comportent des informations d'attribut incluses dans les informations de réponse ; et
après la réception de la demande SDP respective, le procédé comprend en outre :
la création (203) d'une entrée de mappage correspondant à la demande SDP respective, dans lequel l'entrée de mappage comporte des informations relatives de la demande SDP respective et les premières informations de vérification.

4. Procédé selon la revendication 3, dans lequel la vérification des deuxièmes informations de vérification sur la base des premières informations de vérification comprend :
si une entrée de mappage correspond aux deuxièmes informations de vérification se trouvant dans l'entrée de mappage créée, la détermination d'une vérification réussie.

5. Procédé selon la revendication 3, dans lequel les premières informations de vérification comportent un horodatage de la génération des premières informations de vérification, un identifiant de processus de service, et un numéro de connexion de communication en temps réel, RTC.

6. Procédé selon la revendication 3, dans lequel les informations relatives de la demande SDP respective comportent des informations d'un nom de domaine et d'un nom de diffusion en continu d'un média de diffusion en continu qui a été demandé.

7. Procédé selon la revendication 6, dans lequel les informations d'offre comportent des paramètres de codage audio-vidéo pris en charge par le client, et les informations de réponse comportent des paramètres de codage audio-vidéo renvoyés par le serveur ; et
dans lequel les paramètres de codage audio-vidéo renvoyés par le serveur sont des paramètres de codage audio-vidéo en direct acquis par le serveur auprès d'un serveur de radiodiffusion en direct sur la base des informations du nom de domaine et du nom de diffusion en continu dans la demande HTTP.

8. Procédé selon la revendication 3, dans lequel la demande de connexion UDP comporte une demande de liaison basée sur une traversée simple d'un UDP par un protocole de traduction d'adresse réseau, STUN, et les deuxièmes informations de vérification comportent des d'authentification STUN contenues dans la demande de liaison.

9. Procédé selon la revendication 8, dans lequel l'établissement de la connexion UDP en appelant la fonction Connect comprend :
la création d'un descripteur de fichier unique pour la connexion UDP ;
la liaison du descripteur de fichier unique au port UDP correspondant au processus de service ;
l'association d'informations 5-tuple correspondant à la connexion UDP par une connexion inverse d'une adresse d'une extrémité homologue ; et
l'association des informations 5-tuple correspondant à la connexion UDP au processus de service correspondant à la connexion UDP sur la base du descripteur de fichier unique pour terminer la connexion UDP.

10. Procédé selon la revendication 9, dans lequel l'association des informations 5-tuple correspondant à la connexion UDP au processus de service correspondant à la connexion UDP sur la base du descripteur de fichier unique pour terminer la connexion UDP comprend :
la définition du descripteur de fichier unique comme événement de lecture-écriture surveillé par le processus de service, et la définition d'une fonction de rappel d'événement de lecture-écriture du descripteur de fichier unique pour recevoir et traiter des demandes UDP ultérieures correspondant au descripteur de fichier unique par la fonction de rappel d'événement de lecture-écriture.

11. Serveur, comprenant :
au moins un processeur (302) ; et
une mémoire (301) couplée de manière communicative à l'au moins un processeur ;
dans lequel la mémoire stocke des instructions exécutables par l'au moins un processeur qui, lorsqu'elles sont exécutées par l'au moins un processeur, amènent l'au moins un processeur à effectuer le procédé pour une connexion de communication en temps réel selon l'une des revendications 1 à 10.

12. Support de stockage lisible par ordinateur stockant un programme informatique qui, lorsqu'il est exécuté par au moins un processeur, amène l'au moins un processeur à effectuer le procédé de connexion de communication en temps réel selon l'une des revendications 1 à 10.
